(19) Europäisches Patentamt
European Patent Office
Office européen des brevets

(11) Numéro de publication: **0 041 423**
**B1**

(12) # FASCICULE DE BREVET EUROPEEN

(45) Date de publication du fascicule du brevet: **02.10.85**

(51) Int. Cl.⁴: **C 08 F 210/16**, C 08 F 4/62

(21) Numéro de dépôt: **81400749.8**

(22) Date de dépôt: **12.05.81**

(54) **Copolymères de l'éthylène capables d'être moulés et/ou injectés et un procédé pour leur production.**

(30) Priorité: **28.05.80 FR 8011775**

(43) Date de publication de la demande: **09.12.81 Bulletin 81/49**

(45) Mention de la délivrance du brevet: **02.10.85 Bulletin 85/40**

(84) Etats contractants désignés: **AT BE CH DE FR GB IT LI LU NL SE**

(56) Documents cités:
**EP - A - 0 007 647**
**EP - A - 0 016 707**
**FR - A - 2 342 306**
**GB - A - 1 355 245**

(73) Titulaire: **Société Chimique des Charbonnages, Tour Aurore Place des Reflets Cédex no 5, F-92080 Paris la Défense 2 (FR)**

(72) Inventeur: **Raviola, Florent, Lotissement du Bois des Montages Parcelle 22, Vaudricourt F-62131 Verquin (FR)**

(74) Mandataire: **Dubost, Thierry, SOCIETE CHIMIQUE DES CHARBONNAGES Service Propriété Industrielle B.P. 57, F-62670 Mazingarbe (FR)**

**EP 0 041 423 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne la polymérisation de l'éthylène et de monomères $\alpha$-oléfiniques copolymérisables avec l'éthylène, en particulier en vue d'obtenir des produits copolymères de masse volumique comprise entre 0,933 et 0,946 g/cm$^3$.

Le brevet britannique n° 1 355 245 décrit en son exemple 11 un copolymère éthylène/propylène de masse volumique 0,938 g/cm$^3$, d'indice de fluidité égal à 1 dg/min. et de masse moléculaire égale à 50 000. La demande de brevet européen publiée sous le n° 016 707 décrit des copolymères éthylène/propylène de masse volumique $\rho$ comprise entre 0,905 et 0,935 g/cm$^3$ et d'indice de fluidité comprés entre 0,4 t 2 dg/min., dont le taux m de groupes méthyles est compris entre 22 et 62 pour 1000 atomes de carbone dans la molécule et tels que : $0,9530 \leq \rho + 0,83\ m \leq 0,9568$. D'autre part il existe actuellement un besoin, auquel ce copolymère ne répond pas techniquement, de l'industrie de transformation des matières plastiques par les techniques de rotomoulage et d'injection pour des copolymères à base d'éthylène, de masse volumique comprise entre 0,933 et 0,946 g/cm$^3$, présentant des caractéristiques améliorées de résistance à la fissuration, traction-choc et allongement à la rupture. De tels copolymères constituent donc le but de la présente invention.

La présente invention consiste en des copolymères à base d'éthylène et de propylène, de masse volumique comprise entre 0,933 et 0,946 g/cm$^3$ caractérisés en ce que leur indice de fluidité est supérieur à 2 dg/min. et inférieur ou égal à 10 dg/min., ils possèdent de 3 à 27 groupes alkyles pour 1000 atomes de carbone dans la molécule, leur masse volumique $\rho$ et leur taux m de groupes alkyles dans la molécule satisfont la relation:

$$0,9480 \leq \rho + 0,71\ m \leq 0,9525.$$

Par copolymère à base d'éthylène et de propylène il faut entendre, au sens de l'invention, des copolymères dont les motifs éthylène et propylène sont les motifs monomères quantitativement les plus importants sans être nécessairement les seuls présents. Notamment les copolymères selon l'invention peuvent comprendre accessoirement des motifs, à raison de jusqu'à 2% en moles, provenant d'autres monomères $\alpha$-oléfiniques copolymérisables avec l'éthylène tels que notamment, mais non exclusivement, le butène-1, le pentène-1, l'hexène-1. En particulier la présente invention comprend des terpolymères éthylène/propylène/butène-1 qui peuvent être produits de manière avantageuse comme indiqué ci-après.

Les copolymères selon l'invention peuvent subsidiairement être caractérisés par une masse moléculaire Mn comprise entre 10 000 et 28 000 et par une répartition moléculaire représentée par un rapport Mw/Mn de la masse moléculaire en poids à la masse moléculaire en nombre (dénommé indice de polydispersité) compris entre 4 et 8.

Les copolymères selon l'invention présentent un ensemble de caractéristiques favorables pour leur transformation, par des techniques telles que le rotomoulage et l'injection, en objets finis de qualité améliorée. Ces caractéristiques incluent notamment:

- un allongement à la rupture au moins égal à 1000% et pouvant atteindre couramment jusqu'à 1500%, mesuré selon la norme ISO R 527.
- une résistance à la rupture supérieure à 19 600 kN/m$^2$ (200 kgf/cm$^2$) et pouvant atteindre couramment jusqu'à 29 400 kN/m$^2$ (300 kgf/cm$^2$) mesurée selon la norme ASTM D 882-67.
- une résistance à la fissuration supérieure à 15 heures et pouvant atteindre couramment jusqu'à 50 heures, mesurée selon la norme ASTM D 1693-70.
- une traction-choc supérieure à 100 kN.m/m$^2$, et pouvant atteindre couramment jusqu'à 160 kN.m/m$^2$, mesurée selon la norme DIN 53 448.

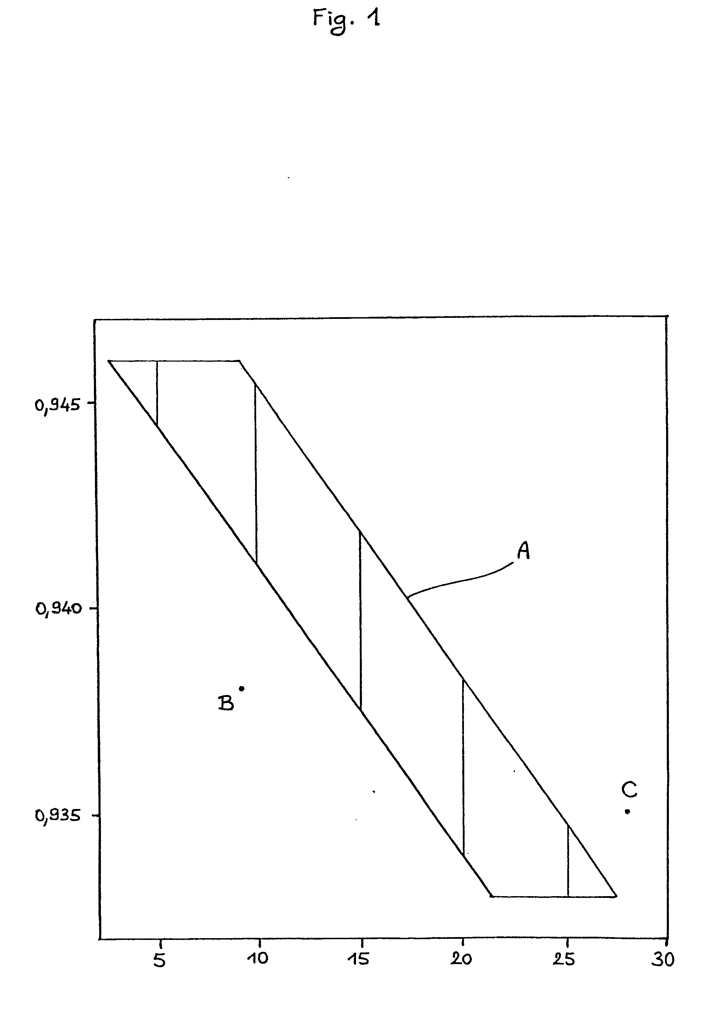

La relation entre $\rho$ et m est schématisée sur la figure unique en annexe représentant le diagramme de la masse volumique (en ordonnées) et du taux de groupes alkyles (en abcisses) de copolymères éthylène-propylène. Sur cette figure, le domaine hachuré A représente l'ensemble des copolymères selon l'invention, le point B représente le copolymère décrit à l'exemple 11 du brevet britannique n° 1 355 245 et le point C représente un copolymère commercial étudié à l'exemple ci-après.

Un procédé de fabrication des copolymères selon l'invention consiste à copolymériser l'éthylène et le propylène sous une pression de 300 à 2500 bars et à une température de 180° à 320° C, dans au moins un réacteur comprenant au moins une zone réactionnelle, en présence d'un système catalytique de type Ziegler comprenant au moins un activateur choisi parmi les hydrures et les dérivés organométalliques des métaux des groupes I à III de la Classification Périodique et au moins un composé halogéné d'un métal de transition des groupes IV B à VI B de la Classification Périodique de manière telle que le flux alimentant le réacteur en régime stationnaire soit constitue 80 de à 95% en poids d'éthylène et de 5 à 20% en poids de propylène et d'autre part le composé halogéne de métal de transition comprend un composé complexe de formule:

$$(MCl_a)(MgX_2)_y(AlCl_3)_z(RMgX)_b$$

dans laquelle M est un métal choisi parmi le titane et le vanadium, X est un halogène, R est un radical hydrocarboné, $2 \leq a \leq 3$, $2 \leq y \leq 20$, $0 \leq z \leq 1/3$ et $0 \leq b \leq 1$. Un tel composé complexe peut être préparé par différentes méthodes : la réduction du tétrachlorure de titane ou vanadium par un composé organomagnésien RMgX conduit par exemple à un composé complexe dans lequel $0 \leq b \leq 1$; d'autres méthodes telles que, par exemple, la réduction du tétrachlorure de titane ou vanadium par l'aluminium en présence d'un halogénure de magnésium, le cobroyage de trichlorure de titane violet (de formule $TiCl_3$ $1/3$ $AlCl_3$) ou de trichlorure de vanadium avec un halogénure de magnésium anhydre, la réduction par un alkylaluminium de tétrachlorure de titane ou vanadium absorbé sur un halogénure de magnésium anhydre, conduisent à des composés complexes dans lesquels $b = 0$.

Enfin le composé halogéné d'un métal de transition peut avoir pour formule

$$(TiCl_3, 1/3\ AlCl_3)(MCl_3)_x(MgX_2)_y,$$

dans laquelle $0{,}3 \leq x \leq 3$; $0 \leq y \leq 20$, M est un métal de transition des groupes V B et VI B de la Classification Périodique et X est un halogène.

Le procédé selon l'invention n'exclut pas l'utilisation, outre l'un des composés de formule spécifiée plus haut, un ou plusieurs autres composés tels que notamment le trichlorure de vanadium ou de titane, ce dernier pouvant être syncristallisé avec le chlorure d'aluminium sous la forme $TiCl_3$, $1/3$ $AlCl^3$. Dans ce cas, il sera généralement avantageux d'utiliser ce ou ces composés dans un réacteur différent (ou dans une zone réactionnelle différente) du réacteur (ou de la zone réactionnelle) dans lequel (laquelle) on utilise ledit composé complexe.

Les proportions de l'activateur et du composé halogéné de métal de transition seront choisies de manière telle que le rapport atomique du métal de l'activateur au métal de transition soit compris entre 0,5 et 20. L'halogène X est de préférence choisi parmi le fluor, le chlore et le brome. Le radical R est de préférence choisi parmi les radicaux aliphatiques saturés (méthyl, éthyl, propyl, n-butyl), et insaturés (allyl) et les radicaux aromatiques (phényl). L'emploi du composé complexe de formule spécifiée plus hant est vien adapté dans toute la gamme de températures du procédé selon l'invention, L'homme de l'art prendra évidemment soin de choisir les autres constituants du système catalytique en fonction de leur stabilité thermique et de leur réactivité vis-à-vis de l'éthylène à la température choisie. De même le temps de séjour du système catalytique sera choisi par l'homme de l'art en fonction de la température de la zone réactionnelle dans laquelle on l'utilise et sera généralement compris entre 5 et 80 secondes; ce temps sera d'autant plus court que la température d'utilisation du catalyseur sera plus élevée.

La composition du flux gazeux alimentant le réacteur en régime stationnaire, telle qu'elle caractérise le procédé selon l'invention, doit s'entendre comme une composition moyenne sur l'ensemble du réacteur, étant bien compris que cette composition n'est pas obligatoirement uniforme et peut varier le long du réacteur, particulièrement lorsque celui-ci comporte plusieurs zones. On pourra même prévoir, dans le cas d'un réacteur comportant plusieurs zones, que le flux gazeux alimentant l'une des zones ait une teneur en propylène nulle tandis que les flux alimentant les autres zones auront des teneurs en propylène suffisamment élevées pour respecter la composition moyenne caractéristique du procédé selon l'invention. D'autre part l'homme de l'art choisira facilement cette composition moyenne parmi la gamme proposée en fonction de la masse volumique du copolymère qu'il désire atteindre : la teneur en propylène dans cette composition sera d'autant plus élevée que la masse volumique désirée sera plus faible.

Le procédé selon l'invention peut être mis en oeuvre en copolymérisant l'éthylène et le propylène en présence d'un hydrocarbure tel que propane, butane, employé à raison de jusqu'à 50% en poids. Afin de contrôler avec précision l'indice de fluidité du copolymère, il peut aussi être avantageux d'effectuer la copolymèrisation en présence de jusqu'à 2% en moles d'hydrogène. Enfin en vue d'appliquer le procédé selon l'invention à la production de terpolymères comme spécifié plus haut, il est aussi possible d'effectuer la copolymérisation en présence d'une quantité mineure, allant jusqu'à 10% en poids, d'une autre $\alpha$-oléfine telle que butène-1, hexène-1. Le procédé selon l'invention est mis en oeuvre de manière continue en utilisant des réacteurs autoclave ou bien tubulaire, comme cela est habituel dans la technique de polymérisation de l'éthylène sous haute pression.

L'invention sera mieux comprise à la lumière des exemples suivants qui ont pour objet de l'illustrer.

### Exemples 1 et 2

On copolymérise l'éthylène et le propylène dans un réacteur autoclave cylindrique maintenu sous une pression de 1200 bars et comprenant quatre zones réactionnelles dont les températures sont respectivement maintenues à 185°C, 215°C, 250°C et 275°C. Le système catalytique utilisé comprend d'une part un composé de formule $TiCl_3$, $1/3$ $AlCl_3$, 6 $MgCl_2$ et d'autre part du diméthyléthyldiéthylsiloxyalane comme activateur, le rapport atomique Al/Ti étant égal à 3. La copolymèrisation est effectuée en présence de respectivement 0,1% (exemple 1) et 0,2% (exemple 2) en volume d'hydrogène. Le flux alimentant le réacteur en régime stationnaire est constitué:

— de 93% en poids d'éthylène et 7% en poids de propylène pour l'exemple 1.
— de 82% en poids d'éthylène et 18% en poids de propylène pour l'exemple 2.

La structure macromoléculaire des copolymères obtenus est analysée de façon conventionnelle par les méthodes de spectrophotométrie infrarouge et de chromatographie de perméation de gel. On mesure ainsi d'une part la teneur molaire en motifs d'éthylène, propène et le cas échéant butène-1, et d'autre part l'indice de polydispersité Mw/Mn. On mesure également l'indice de fluidité I. F. des copolymères selon la norme ASTM D 1238-73 et leur masse volumique $\rho$ exprimée en g/cm$^3$.

On prépare ensuite, à partir de ces copolymères, des plaques moulées par compression afin de mesurer la résistance à la rupture R. R. selon la norme ASTM D 882-67 (exprimée en kN/m$^2$ (kgf/cm$^2$)), l'allongement à la rupture A. R. selon la norme ISO R 527 (exprimé en %) et la résistance à la fissuration sous contrainte de 50 kg/cm$^2$, ci-après désignée $F_{50}$, selon la norme ASTM D 1693-70 (exprimée en heures). On prépare également par injection-moulage des éprouvettes entaillées destinées à la mesure de la résistance à la traction-choc, ci-après désignée T. C., selon la norme DIN 53 448 (exprimée en kN.m/m$^2$ (kgcm/cm$^2$)).

L'ensemble des résultats de ces mesures, ainsi que le taux m de groupes alkyles, est reporté au tableau ci-après.

## Exemple 3

On copolymérise l'éthylène et le propylène, en présence de 0,16% en volume d'hydrogène, dans un réacteur autoclave cylindrique maintenu sous une pression de 900 bars et comprenant trois zones réactionnelles dont les températures sont respectivement maintenues à 220°C, 240°C et 285°C. Le système catalytique utilisé comprend d'une part un composé de formule $TiCl_3$, $^1/_3$ $AlCl_3$, 6 $MgCl_2$ et d'autre part du diméthyléthyldiéthylsiloxyalane comme activateur, le rapport atomique Al/Ti étant égal à 4,8. Le flux alimentant le réacteur en régime stationnaire est constitué de 82% en poids d'éthylène et de 18% en poids de propylène.

La structure macromoléculaire, l'indice de fluidité et la masse volumique du copolymère obtenu sont déterminés comme aux exemples précédents. On note que les conditions opératoires permettent la dimérisation in situ de l'éthylène et conduisent à la formation d'un terpolymère éthylène/propylène/butène-1. On mesure également sur des plaques moulées et des éprouvettes préparées à partir de ce terpolymère, selon les méthodes décrites pour les exemples précédents, les différentes propriétés dynamométriques et mécaniques rapportées dans le tableau ci-après.

## Exemple 4

On copolymérise l'éthylène et le propylène, en présence de 0,4% en volume d'hydrogène, dans un réacteur autoclave cylindrique maintenu sous une pression de 1900 bars et comprenant trois zones réactionnelles dont les températures sont respectivement maintenues à 215°C, 250°C et 280°C. Le système catalytique utilisé comprend d'une part un composé de formule $TiCl_3$, $^1/_3$ $AlCl_3$, 6 $MgCl_2$ et d'autre part du trioctylaluminium comme activateur, le rapport atomique Al/Ti étant égal à 3. Le flux alimentant le réacteur en régime stationnaire est constitué de 88% en poids d'éthylène et de 12% en poids de propylène.

La structure macromoléculaire, l'indice de fluidité, la masse volumique et l'allongement à la rupture du copolymère obtenu sont déterminés comme aux exemples précédents et indiqués dans le tableau ci-après. La résistance à la fissuration selon la norme ASTM D 1693-70, est déterminée à déformation constante sur des plaques moulées par injection.

## Exemple 5

On reproduit l'expérience de l'exemple 3 ci-dessus, à l'exception de la teneur en hydrogène (égale à 0,1% en volume) et du flux alimentant le réacteur en régime stationnaire, qui est ici constitué de 86% en poids d'éthylène et de 14% en poids de propylène. Comme dans l'exemple 3, on note que les conditions opératoires permettent la dimérisation in situ de l'éthylène et conduisent à la formation d'un terpolymère, dont la structure macromoléculaire, l'indice de fluidité, la masse volumique, les propriétés dynamométriques et mécaniques sont rapportés dans le tableau ci-après.

## Exemple 6 (comparatif)

On considère maintenant un copolymère éthylène/propylène commercial ayant une masse moléculaire Mn égale à 12 000 et un taux de groupes alkyles dans la molécule égal à 28 pour 1000 atomes de

carbone. La structure macromoléculaire, l'indice de fluidité, la masse volumique et l'indice de polydispersité de ce copolymère sont mesurés et indiqués dans le tableau ci-après. On peut remarquer que ce copolymère se situe en dehors du domaine des copolymères selon l'invention, comme représenté par le point C de la figure en annexe, tout en possédant une masse volumique et un indice de fluidité qui le rendent comparable aux exemples précédents. On mesure sur des plaques moulées et des éprouvettes, préparées à partir de ce copolymère, selon les méthodes décrites pour les exemples précédents, les différentes propriétés dynamométriques et mécaniques rapportées dans le tableau ci-après. Il est aisé de remarquer l'amélioration de toutes ces propriétés apportées par les copolymères et terpolymères selon l'invention par rapport à ce produit commercial.

De manière cohérente avec leur taux de groupes alkyles dans la molécule, les copolymères selon l'invention comprennent généralement de 95 à 99% de motifs dérivés de l'éthylène.

Tableau

| | Exemple 1 | 2 | 3 | 4 | 5 | 6 |
|---|---|---|---|---|---|---|
| % (moles) $C_2H_4$ | 98,5 | 95,2 | 96,7 | 97,0 | 96,8 | 94,4 |
| % (moles) $C_3H_6$ | 1,5 | 4,8 | 2,6 | 3,0 | 2,2 | 5,6 |
| % (moles) $C_4H_8$ | — | — | 0,7 | — | 1,0 | — |
| I. F. dg/min. | 4,9 | 4,9 | 3,3 | 8,7 | 2,5 | 6,7 |
| $\rho$g/cm$^3$ | 0,945 | 0,934 | 0,938 | 0,941 | 0,940 | 0,935 |
| Mw/Mn | 7,8 | 5,6 | 6,1 | 4,2 | 4,9 | 8,8 |
| A. R. % | 1224 | 1000 | 1276 | 1090 | 1172 | 616 |
| $F_{50}$h | 16 | 19 | 19 | 50 | 16 | 1 |
| T. C | — | — | — | — | — | — |
| R. R. | 24 794 (253) | — | 25 774 (263) | — | 29 302 (299) | 10 388 (106) |
| m/1000 C | 7,5 | 24 | 16,5 | 15 | 16 | 28 |

**Revendications**

1. Procédé de copolymérisation de l'éthylène et du propylène sous une pression de 300 à 2500 bars et à une température de 180° à 320°C, dans au moins un réacteur comprenant au moins une zone réactionnelle, en présence d'un système catalytique de type Ziegler comprenant au moins un activateur choisi parmi les hydrures et les dérivés organométalliques des métaux des groupes I à III de la Classification Périodique et au moins un composé halogéné d'un métal de transition des groupes IV B à VI B de la Classification Périodique, caractérisé en ce que d'un part le flux alimentant le réacteur en régime stationnaire est constitué de 80 à 95% en poids d'éthylène et de 5 à 20% en poids de propylène et d'autre part le composé halogéné de métal de transition comprend un composé complexe de formule

$$(MCl_a)(MgX_2)_y(AlCl_3)_z(RMgX)_b,$$

dans laquelle M est un métal choisi parmi le titane et le vanadium, X est un halogène, R est un radical hydrocarboné, $2 \leq a \leq 3$, $2 \leq y \leq 20$, $0 \leq z \leq 1/3$ et $0 \leq b \leq 1$.

2. Procédé selon la revendication 1, caractérisé en ce que le composé halogéné de métal de transition a pour formule

$$(TiCl_3, 1/3\ AlCl_3)(MCl_3)_x(MgX_2)_y,$$

dans laquelle $0,3 \leq x \leq 3$, $0 \leq y \leq 20$, M est un métal de transition des groupes V B et VI B de la Classification Périodique et X est un halogène.

3. Procédé selon la revendication 1, caractérisé en ce que le système catalytique comprend au moins deux composés halogénés de métal de transition utilisés dans des zones réactionnelles différentes d'un même réacteur ou de réacteurs différents.

4. Procédé selon l'une des revendications 1 à 3, caractérisé en ce que le rapport atomique du métal de l'activateur au métal de transition est compris entre 0,5 et 20.

5. Procédé selon l'une des revendications 1 à 4, caractérisé en ce que le temps de séjour du système catalytique dans le réacteur est compris entre 5 et 80 secondes.

6. Procédé selon l'une des revendications 1 à 5, caractérisé en ce que le flux alimentant le réacteur en régime stationnaire comprend en outre jusqu'à 10% en poids d'une $\alpha$-oléfine autre que le propylène.

7. Procédé selon l'une des revendications 1 à 6, caractérisé en ce que la copolymérisation est effectuée en présence de jusqu'à 2% en moles d'hydrogène.

8. Copolymères à base d'éthylène et de propylène, de masse volumique comprise entre 0,933 et 0,946 g/cm$^3$, caractérisés en ce que leur indice de fluidité est supérieur à 2 dg/min. et inférieur ou égal à 10 dg/min. ils possèdent de 3 à 27 groupes alkyles pour 1000 atomes de carbone dans la molécule, leur masse volumique $\rho$ et leur taux m de groupes alkyles dans la molécule satisfont la relation:

$$0{,}9480 \leq \rho + 0{,}71\ m \leq 0{,}9525$$

et en ce qu'ils sont susceptibles d'être obtenus par le procédé selon l'une des revendications 1 à 7.

9. Copolymères selon la revendication 8, caractérisés en ce qu'ils comprennent en outre des motifs provenant de monomères $\alpha$-oléfiniques copolymérisables avec l'éthylène.

10. Copolymères selon l'une des revendications 8 et 9, caractérisés en ce que leur masse moléculaire est comprise entre 10 000 et 28 000.

11. Copolymères selon l'une des revendications 8 à 10, caractérisés en ce que leur indice de polydispersité est compris entre 4 et 8.

12. Copolymères selon l'une des revendications 8 à 11, caractérisés en ce que leur allongement à la rupture mesuré selon la norme ISO R 527 est au moins égal à 1000%.

13. Copolymères selon l'une des revendications 8 à 12, caractérisés en ce que leur résistance à la rupture mesurée selon la norme ASTM D 882-67 est supérieure à 19 600 kN/m$^2$ (200 kgf/cm$^2$).

14. Copolymères selon l'une des revendications 8 à 13, caractérisé en ce que leur résistance à la fissuration mesurée selon la norme ASTM D 1693-70 est supérieure à 15 heures.

**Patentansprüche**

1. Verfahren zur Copolymerisation von Äthylen und Propylen unter einem Druck von 300 bis 2500 bar und bei einer Temperatur von 180°C bis 320°C in mindestens einem Reaktor mit mindestens einer Reaktionszone, in Gegenwart eines Ziegler-Katalysatorsystems, das zumindest einen Aktivator, ausgewählt aus den Hydriden und den organometallischen Derivaten der Metalle der Gruppen I bis III des Periodensystems und mindestens eine Halogenverbindung eines Übergangsmetalls der Gruppen IV B bis VI B des Periodensystems enthält, dadurch gekennzeichnet, daß einerseits der den Reaktor gleichmäßig speisende Strom von 80 bis 95 Gew.-% Äthylen und 5 bis 20 Gew.-% Propylen gebildet ist und andererseits die Halogenverbindung des Übergangsmetalls eine Komplexverbindung der Formel $(MCl_a)(MgX_2)_y(AlCl_3)_z(RMgX)_b$ enthält, in der M ein Metall ausgewählt aus der Gruppe bestehend aus Titan und Vanadium, X ein Halogen und R ein Kohlenwasserstoffradikal bedeuten und $2 \leq a \leq 3$, $2 \leq y \leq 20$, $0 \leq z \leq {}^1/_3$ und $0 \leq b \leq 1$.

2. Verfahren nach Anspruch 1, dadurch gekennzeichnet, daß die Halogenverbindung des Übergangsmetalls die Formel $(TiCl_3, {}^1/_3\ AlCl_3)(MCl_3)_x(MgX_2)_y$ besitzt, in der $0{,}3 \leq x \leq 3$, $0 \leq y \leq 20$ und M ein Übergangsmetall der Gruppen V B und VI B des Periodensystems und X ein Halogen bedeuten.

3. Verfahren nach Anspruch 1, dadurch gekennzeichnet, daß das Katalysatorsystem mindestens zwei Übergangsmetall-Halogenverbindungen enthält, die in unterschiedlichen Reaktionszonen ein und desselben Reaktors oder verschiedener Reaktoren verwendet werden.

4. Verfahren nach einem der Ansprüche 1 bis 3, dadurch gekennzeichnet, daß das Atomverhältnis zwischen dem Metall des Aktivators und dem Übergangsmetall zwischen 0,5 und 20 beträgt.

5. Verfahren nach einem der Ansprüche 1 bis 4, dadurch gekennzeichnet, daß die Verweilzeit des Katalysatorsystems im Reaktor zwischen 5 und 80 s beträgt.

6. Verfahren nach einem der Ansprüche 1 bis 5, dadurch gekennzeichnet, daß der den Reaktor gleichmäßig speisende Strom weiters bis zu 10 Gew.-% eines anderen $\alpha$-Olefins als Propylen enthält.

7. Verfahren nach einem der Ansprüche 1 bis 6, dadurch gekennzeichnet, daß die Copolymerisation in Gegenwart von bis zu 2 Mol-% Wasserstoff durchgeführt wird.

8. Copolymere auf Basis von Äthylen und Propylen, mit einer Dichte zwischen 0,933 und 0,946 g/cm$^3$, dadurch gekennzeichnet, daß ihr Fließindex größer als 2 dg/min und kleiner als oder gleich 10 dg/min ist, daß sie 3 bis 27 Alkylgruppen pro 1000 Kohlenstoffatome im Molekül besitzen, daß ihre Dichte $\rho$ und ihre Alkylgruppenzahl m die Beziehung $0{,}9480 \leq \rho + 0{,}71\ m \leq 0{,}9525$ erfüllen, und daß sie mit dem

Verfahren nach einem der Ansprüche 1 bis 7 erhalten werden können.

9. Copolymere nach Anspruch 8, dadurch gekennzeichnet, daß sie weiters Einheiten enthalten, welche von mit Äthylen copolymerisierbaren $\alpha$-olefinischen Monomeren stammen.

10. Copolymere nach Anspruch 8 oder 9, dadurch gekennzeichnet, daß ihre Molekularmasse zwischen 10 000 und 28 000 liegt.

11. Copolymere nach einem der Ansprüche 8 bis 10, dadurch gekennzeichnet, daß ihre Polydispersitätszahl zwischen 4 und 8 liegt.

12. Copolymere nach einem der Ansprüche 8 bis 11, dadurch gekennzeichnet, daß ihre Bruchdehnung, gemessen nach der Norm ISO R 527, mindestens 1000% beträgt.

13. Copolymere nach einem der Ansprüche 8 bis 12, dadurch gekennzeichnet, daß ihre Bruchfestigkeit, gemessen nach der Norm ASTM D 882-67, größer als 19 600 $kN/m^2$ (200 $kg/cm^2$) ist.

14. Copolymere nach einem der Ansprüche 8 bis 13, dadurch gekennzeichnet, daß ihre Rißbildungsfestigkeit, gemessen nach der Norm ASTM D 1693-70, mehr als 15 Stunden beträgt.

**Claims**

1. Process for the copolymerization of ethylene and propylene under a pressure of from 300 to 2500 bars and at a temperature of from 180°C to 320°C in at least one reactor comprising at least one reaction zone, in the presence of a Ziegler type catalytic system comprising at least one activator selected from the hydrides and the organo-metallic derivatives of the metals of Groups I to III of the Periodic System and at least one halogenated compound of a transition metal of Groups IV B to VI B of the Periodic System, characterized in that, on the one hand, the flux feeding the reactor in stationary operation consists of from 80 to 95% by weight of ethylene and from 5 to 20% by weight of propylene, and in that, on the other hand, the halogenated transition metal compound comprises a complex compound having the formula

$$(MCl_a)(MgX_2)_y(AlCl_3)_z(RMgX)_b,$$

in which M is a metal selected from titanium and vanadium, X is a halogen, R is a hydrocarbon radical, $2 \leq a \leq 3$, $2 \leq y \leq 20$, $0 \leq z \leq 1/3$ and $0 \leq b \leq 1$.

2. Process according to claim 1, characterized in that the halogenated transition metal compound has the formula

$$(TiCl_3, {}^1/_3\,AlCl_3)(MCl_3)_x(MgX_2)_y,$$

in which $0.3 \leq x \leq 3$, $0 \leq y \leq 20$, M is a transition metal of Groups V B and VI B of the Periodic System and X is a halogen.

3. Process according to claim 1, characterized in that the catalytic system comprises at least two halogenated transition metal compounds used in different reaction zones of a same reactor or of different reactors.

4. Process according to one of claims 1 to 3, characterized in that the atomic ratio of activator metal to transition metal is between 0.5 and 20.

5. Process according to one of claims 1 to 4, characterized in that the residence time of the catalytic system in the reactor is between 5 and 80 seconds.

6. Process according to one of claims 1 to 5, characterized in that the flux feeding the reactor in stationary operation further comprises up to 10% by weight of an $\alpha$-olefin other than propylene.

7. Process according to one of claims 1 to 6, characterized in that the copolymerisation is effected in the presence of up to 2 molar percent of hydrogen.

8. Copolymers based on ethylene and propylene, having a density of between 0.933 and 0.946 $g/m^3$, characterized in that their melt index is greater than 2 dg/min and less than or equal to 10 dg/min, in that they have from 3 to 27 alkyl groups per 1000 carbon atoms in the molecule, in that their density $\rho$ and their proportion m of alkyl groups in the molecule satisfy the relationship:

$$0.9480 \leq \rho + 0.71\ m \leq 0.9525,$$

and in that they are capable of being obtained by the process according to one of the claims 1 to 7.

9. Copolymers according to claim 8, characterized in that they further comprise units derived from $\alpha$-olefinic monomers copolymerizable with ethylene.

10. Copolymers according to one of claims 8 and 9, characterized in that their molecular weight is between 10,000 and 28,000.

11. Copolymers according to one of claims 8 to 10, characterized in that their polydispersity index is between 4 and 8.

12. Copolymers according to one of claims 8 to 11, characterized in that their elongation at break measured according to ISO Standard R 527 is at least equal to 1000%.

13. Copolymers according to one of claims 8 to 12, characterized in that their tensile strenght at break measured according to ASTM Standard D 882-67 is higher than 19,600 $kN/m^2$ (200 $kgf/cm^2$).

14. Copolymers according to one of claims 8 to 13, characterized in that their crack resistance measured according to ASTM Standard D 1693-70 is higher than 15 hours.

Fig. 1